# EUROPÄISCHE PATENTSCHRIFT

(11) **EP 1 287 402 B1**
(45) Veröffentlichungstag und Bekanntmachung des Hinweises auf die Patenterteilung: **11.05.2005**
(21) Anmeldenummer: 01980038.2
(22) Anmeldetag: 16.05.2001
(51) Int. Cl.: G03B 19/18, G02B 17/02, G03B 19/20

(54) **OPTISCHES SYSTEM ZUR DREHUNG VON AUFNAHMEBILDERN EINER LAUFBILDKAMERA UM DIE OPTISCHE ACHSE**
OPTICAL SYSTEM FOR THE ROTATION OF IMAGES TAKEN BY A FILM CAMERA ABOUT THE OPTICAL AXIS
SYSTEME OPTIQUE POUR FAIRE TOURNER DES IMAGES PRISES PAR UNE CAMERA AUTOUR DE L'AXE OPTIQUE

(30) Priorität: 23.05.2000 DE 10027371
(43) Veröffentlichungstag der Anmeldung: 05.03.2003
(73) Patentinhaber: ARNOLD & RICHTER CINE TECHNIK GMBH & CO. BETRIEBS KG, 80799 München (DE)
(72) Erfinder: FILOUS, Pavel, A-2353 Guntramsdorf (AT); TRAUNINGER, Walter, A-2381 Laab im Wald (AT); HAUBMANN, Michael, A-1120 Wien (AT)
(74) Vertreter: Ninnemann, Detlef, Dipl.-Ing.
(86) Internationale Anmeldenummer: PCT/DE2001/001909
(87) Internationale Veröffentlichungsnummer: WO 2001/090786

(56) Entgegenhaltungen:
- DE-A- 3 245 477
- US-A- 4 427 269
- US-A- 5 677 763

## Beschreibung

Die Erfindung bezieht sich auf ein optisches System zur Drehung von Aufnahmebildern einer Laufbildkamera um die optische Achse gemäss dem Oberbegriff des Patentanspruchs 1.

Aus der DE 24 36 230 A1 ist ein optisches System zur Drehung von Abbildungen in einem Aufnahme-Linsensystem für Fernsehkameras, Laufbildkameras und fotografische Kameras bekannt. Das optische System enthält ein zur Drehung der Abbildung dienendes Prisma, das zwischen einer Vorderlinse und einer hinteren Linse eines Relais-Linsensystems angeordnet ist sowie eine Feldlinse, die auf einer ersten Fokussierungsebene angeordnet ist, auf der eine Abbildung durch eine Objektivlinse erzeugt wird. Die Feldlinse hat einen solchen Brennpunktabstand, daß die zu der Öffnung der Objektivlinse konjugierte Pupille des Relais-Linsensystems im Mittelpunkt des Strahlengangs des zur Drehung der Abbildung dienenden Prismas angeordnet werden kann.

Aus der DE 32 45 477 A1 ist ein optisches System zur Bilddrehung bekannt, das ein Projektionslinsensystem zur Erzeugung eines Bildes in einer vorbestimmten Ebene, ein um die optische Achse des Projektionslinsensystems drehbares Prisma zur Bilddrehung und ein zwischen dem Projektionslinsensystem und dem Prisma angeordnetes, zur Lichtabschirmung dienendes Schlitzelement, das mit der Drehung des Prismas um die optische Achse drehbar ist, aufweist.

Die Verwendung eines solchen optischen Systems zur Bilddrehung in Verbindung mit einer Laufbildkamera ermöglicht es, bei einer geforderten Bilddrehung nicht die gesamte Laufbildkamera um die optische Achse zu drehen, so daß die Laufbildkamera wie gewohnt bedienbar und das Okular sowie alle Bedienelemente der Laufbildkamera in ihrer gewohnten Position bleiben. Dadurch ist die Verwendung von Standardobjektiven und Standardzubehör gewährleistet und ein Einsatz auf handgehaltenen oder am Körper eines Kameramanns befestigten Systemen möglich.

Aus der US-A-4 427 269 sind ein Verfahren und eine Vorrichtung zur automatischen Kompensation der Bilddrehung durch eine Gelenkoptik bekannt, die aus Gliedern mit Linsen zur optischen Abbildung sowie Gelenken mit Spiegeln oder Prismen zur Umlenkung des Strahlenganges besteht. Zur Kompensation der Bilddrehung beim Drehen der Gelenkoptik wird ein Signal erzeugt, dessen Polarität abhängig ist von der Drehrichtung des in einer Beobachtungsebene erzeugten Bildes gegenüber einem Objekt. Von diesem Signal wird ein im Strahlengang der Gelenkoptik angeordnetes Kompensationselement angesteuert und bis zum Verschwinden des Signals betätigt. Das Kompensationselement besteht aus einem als Dove-Prisma ausgebildeten optischen Element zur Bilddrehung, das innerhalb eines Tubus von mehreren gelenkig miteinander verbundenen Tuben der Gelenkoptik angeordneten und über ein Getriebe mit einem ausserhalb des Tubus angeordneten Motor verbunden ist, der von einem Servoverstärker angesteuert wird.

Der Servoverstärker erhält ein Signal von einer Signalaufbereitung, die mit einem in der Beobachtungsebene angeordneten Sensor verbunden ist, auf dem ein Bild eine innerhalb oder ausserhalb eines Zwischenbildes angeordnete Markierung abgebildet wird. Weicht diese Markierung von einer vorgegebenen Nulllage ab, dann erzeugt der Sensor ein Signal, das über die Signalaufbereitung und den Servoverstärker zur Ansteuerung des Motors führt, der über das Getriebe das optische Element zur Kompensation der Bilddrehung solange dreht, bis die Bildmarkierung sich wieder in der Nulllage befindet.

Aus der US-A-5 677 763 ist eine optische Mess- und Betrachtungsvorrichtung bekannt, mit der physikalische und optische Charakteristika eines Objekts mittels einer Einrichtung zur Bilddrehung, die aus einem Dove-Prisma, einem Pechan-Prisma oder einer Spiegelanordnung bestehen kann, gemessen und die Messstrahlen an ein eindimensionales CCD-Element abgegeben werden. Das optische Elemente zur Bilddrehung ist innerhalb eines Tubus angeordnet, der über Kugellager gegenüber einem Gehäuse abgestützt ist, an dem ein Antriebsmotor befestigt ist, der über einen Antriebsriemen mit dem optischen Element zur Bilddrehung verbunden ist. Zusätzliche optische Elemente wie eine plankonkave Linse, eine Blende und eine plankonvexe Linse sind ausserhalb des Tubus aber innerhalb des Gehäuses der optischen Mess- und Betrachtungsvorrichtung angeordnet und mit diesem fest verbunden.

Die vorstehend genannten US-A-4 427 269 und US-A-5 677 763 sind speziell auf die Bedürfnisse zur Kompensation von Bilddrehungen in einer Gelenkoptik und zur Messung von Umrissen eines Objektes ausgerichtet. Die Anforderungen an ein optisches System zur Drehung von Aufnahmebildern einer Laufbildkamera unterscheiden sich davon aber wesentlich.

Eine Anforderung an ein optisches System einer Laufbildkamera ist die Lichtstärke des verwendeten optischen Systems, denn nur mit einem optischen System hoher Lichtstärke lassen sich zufriedenstellende Filmaufnahmen auch bei hohen Filmgeschwindigkeiten und unter ungünstigen Lichtverhältnissen realisieren. Eine weitere Anforderung an ein optisches System einer Laufbildkamera besteht in dessen einfacher Handhabung, wozu eine minimale Baugrösse und leichte Montage und Demontage gehören.

Weiterhin muss zur Erzeugung spezieller Effekte bei Filmaufnahmen eine extrem hohe Dynamik des optischen Systems gewährleistet sein, so dass sich unter anderem auch sogenannte "Stroboskopeffekte" erzielt lassen, d. h. spezielle Effekte, die mit einem raschen Wechsel der Lage der Horizontlinie ver bunden sind. Eine derartige extrem hohe Dynamik setzt besondere mechanische Maßnahmen voraus, um die bewegten Massen gering zu halten und eine unmittelbare Kraft- oder Drehmomentübertragung zu gewährleisten.

Aufgabe der vorliegenden Erfindung ist es daher, ein optisches System zur zur Drehung von Aufnahmebildern in das Abbildungssystem einer Laufbildkamera ohne Herabsetzung der optischen Leistungen des Abbildungssystems mit einer hochgenauen Einstellung und sehr hohen Dynamik des optischen Systems, Inanspruchnahme eines geringen Bauraums und mit nur minimaler Geräuschentwicklung zu integrieren.

Diese Aufgabe wird erfindungsgemäß durch die Merkmale des Patentanspruchs 1 gelöst.

Die erfindungsgemäße Lösung ermöglicht die Integration eines optischen Systems zur Drehung von Aufnahmebildern in das Abbildungssystem einer Laufbildkamera ohne Herabsetzung der optischen Leistungen des Abbildungssystems mit einer hochgenauen Einstellung und sehr hohen Dynamik des optischen Systems unter Inanspruchnahme eines minimalen Bauraums, Gewährleistung eines hohen Bedienungskomforts sowie hoher Verstellgeschwindigkeiten bei der Bilddrehung bei minimalem Geräuschniveau.

Durch die unmittelbare, starre Verbindung des ringförmigen Antriebsmotors und des Positionsgebers mit dem optischen System zur Drehung von Aufnahmebildern tritt keinerlei mechanisches Spiel auf und insbesondere durch den Wegfall eines mechanischen Getriebes kann das Geräuschniveau deutlich reduziert werden. Zudem ist der benötigte Bauraum kleiner als bei einer Anordnung mit externen und exzentrisch zum optischen System angeordneten Antriebsmotoren. Durch den direkten Einbau eines ringförmigen Antriebsmotors um das optische Element zur zur Drehung von Aufnahmebildern werden keine externen und exzentrischen Kräfte in das optische System eingeleitet, die zu einer Reduktion der optischen Leistung, beispielsweise zur Verhinderung der Zentrierung des optischen Systems führen können.

Insbesondere eignet sich das optische System zur Bilddrehung zur endlosen Drehung von Aufnahmebildern um die optische Achse.

Eine vorteilhafte Ausgestaltung der erfindungsgemäßen Lösung ist dadurch gekennzeichnet, dass das drehbar gelagerte optische Element aus einem drehbaren Prisma, vorzugsweise einem Schmidt-Pechan-Prisma, und/oder einer Spiegelanordnung besteht.

Die Bilddrehung und/oder Aufrichtung der Aufnahmebilder kann wahlweise über ein Prisma oder über mehrere zueinander entsprechend ausgerichtete und um die optische Achse drehbare Spiegel bzw. über eine Kombination aus drehbarem Prisma und drehbaren Spiegeln erfolgen.

Insbesondere weist das optische System in Richtung des Aufnahmestrahlenganges eine Feldlinse oder ein Feldlinsensystem, das drehbare Prisma und/oder die drehbare Spiegelanordnung, ein Übertragungsobjektiv und ein feststehendes Prisma oder eine feststehende Spiegelanordnung auf.

Weiterhin kann das Übertragungsobjektiv aus einer Relaisoptik oder einem Doppel-Gauss-Objektiv bestehen.

Eine Weiterbildung der erfindungsgemäßen Lösung ist dadurch gekennzeichnet, dass das optische System zur Drehung von Aufnahmebildern um die optische Achse zwischen einem Objektivträger und einem Aufnahmeobjektiv der Laufbildkamera angeordnet ist, wobei das optische System zur Drehung der Aufnahmebilder um die optische Achse einen vorderen und hinteren Befestigungsflansch zur Verbindung des optischen Systems mit dem Aufnahmeobjektiv und dem Objektivträger des Kameragehäuses aufweist.

Durch die Anordnung des hinteren Befestigungsflansches des optischen Systems zwischen dem Übertragungsobjektiv und dem feststehenden Prisma kann das feststehende Prisma zumindest teilweise innerhalb des Kameragehäuses angeordnet werden, so daß eine entsprechende Verkürzung und Integration des optischen Systems in die Filmkamera möglich ist.

In einer vorteilhaften Ausgestaltung der erfindungsgemäßen Lösung ist zwischen dem Übertragungsobjektiv und dem feststehenden Prisma eine Irisblende in dem optischen System zur Bilddrehung angeordnet, die von der Gehäuseseite des optischen Systems aus bedienbar ist.

Mittels einer zumindest einen Teil der optischen Elemente des optischen Systems zur Bilddrehung justierenden Einrichtung kann das optische System zur Bilddrehung an unterschiedliche Aufnahmeobjektive angepasst werden, so dass auch Objektive anwendbar sind, deren Austrittspupillen stärker voneinander abweichende Pupillenlagen haben, wie beispielsweise Zoom-Objektive.

Da insbesondere Zoom-Objektive die Eigenschaft aufweisen, daß sich in den Meisten Ausführungsformen die Austrittspupillenlage während einer Brennweitenveränderung stark verändert, ist es vorteilhaft, eine Anpassung des optischen Systems an unterschiedliche Brennweiten vorzunehmen. Dies kann im Betrieb beispielsweise durch eine entsprechende Anpassung eines Feldlinsensystems erfolgen.

Eine justierende Einrichtung kann beispielsweise auch darin bestehen, daß die Feldlinse oder das Feldlinsensystem so im optischen System angeordnet und befestigt sind, daß die Feldlinse oder zumindest ein Teil des Feldlinsensystems vorzugsweise von der Seite des vorderen Befestigungsflansches austauschbar ist.

Mit einer austauschbaren Feldlinse oder einem teilweise austauschbaren Feldlinsensystem ist die Möglichkeit gegeben, außerhalb des Betriebs der Laufbildkamera Objektive mit stärker abweichenden Pupillenlagen anwendbar zu machen.

Eine weitere Justageeinrichtung besteht darin, daß das drehbare Prisma oder die drehbare Spiegelanordnung im Gehäuse des optischen Systems kardanisch aufgehängt und in mindestens zwei Ebenen verstellbar ist. Zusätzlich zur Verkippung kann das drehbare Prisma oder die drehbare Spiegelanordnung in wenigstens eine Achsenrichtung, d.h. in Richtung der optischen Achse und/oder senkrecht dazu verschoben werden.

Zu diesem Zweck ist das drehbare Prisma in einem Prismastuhl befestigt, der um eine erste Achse schwenkbar in einem Prismahalter gelagert ist, und der Prismahalter um eine zweite, vorzugsweise senkrecht zur ersten Achse angeordnete zweite Achse schwenkbar in einer mit dem ringförmigen Antriebsmotor verbundenen Prismawelle angeordnet. Die Prismawelle kann innerhalb einer Distanzhülse für das Lager des drehbaren Prismas angeordnet werden, während die Distanzhülse innerhalb eines Tubus gelagert und der Tubus von einer Abdeckung des Gehäuses des optischen Systems umgeben ist.

Vorzugsweise bestehen die erste und zweite Achse aus Bolzen, wobei die die erste Achse bildenden Bolzen diametral zueinander angeordnet, drehbar in der Prismawelle gelagert und mit dem Prismahalter verbunden sind und die zweite Achse durch diametral zueinander und senkrecht zu den Bolzen der ersten Achse angeordnete Bolzen bestehen, die im Prismahalter gelagert und mit dem Prismastuhl verbunden sind.

Zum Einstellen der Bolzen und damit der Lage des drehbaren Prismas ist im Gehäuse des optischen Systems bzw. im Tubus und in der Prismawelle eine Öffnung zum Einstellen der Bolzen angeordnet.

Eine weitere vorteilhafte Ausgestaltung der erfindungsgemäßen Lösung ist dadurch gekennzeichnet, daß das Gehäuse des optischen Systems über ein Verbindungselement mit am Kameragehäuse befestigten Stützrohren oder -stangen verbunden ist, wobei das Verbindungselement insbesondere eine mit dem Signalgeber und dem ringförmigen Antriebsmotor verbundene Steuerelektronik enthält.

Durch die Verbindung der Steuerelektronik zur Auswertung der Positionsgebersignale und zur Ansteuerung des ringförmigen Ansteuermotors des optischen Systems zur Bilddrehung mit der Steuerelektronik der Laufbildkamera kann insbesondere die Drehung des optischen Systems zur Bilddrehung mit dem Filmtransport synchronisiert werden. Insbesondere kann die Drehung des optischen Systems zur Bilddrehung in der Transportphase des Laufbildfilms erfolgen.

Durch die Verwendung eines motorischen Antriebs zur Drehung des optischen Systems zur Bilddrehung sind nicht nur sehr hohe Verstellgeschwindigkeiten erreichbar, sondern auch mit der Laufbildkamera synchronisierte Verstellbewegungen in der Transportphase des Laufbildfilms möglich. Daher kann zwischen der Belichtung aufeinanderfolgender Einzelbilder eine Veränderung der Horizontlinie der Laufbildkamera vorgenommen werden, wobei durch den direkten Einbau des Antriebes in koaxialer Form keine externen und exzentrischen Kräfte in das System eingeleitet werden, die zu einer Reduktion der optischen Leistungen führen könnten.

Insbesondere kann die Steuerelektronik der Laufbildkamera während der Transportphase des Laufbildfilms ein Freigabesignal an die Steuerelektronik zur Ansteuerung des Verstellmotors des optischen Systems zur Bilddrehung abgeben, so daß immer dann eine Bilddrehung möglich ist, wenn der Aufnahmestrahlengang während der Transportphase des Laufbildfilms unterbrochen ist.

Anhand eines in der Zeichnung dargestellten Ausführungsbeispieles soll der der Erfindung zugrundeliegende Gedanke näher erläutert werden. Es zeigen:
- Figur 1 -: eine schematische Darstellung des Grundaufbaus eines zwischen einem Aufnahmeobjektiv und einer Laufbildkamera angeordneten optischen Systems zur Bilddrehung;
- Figur 2 -: eine detaillierte Darstellung der Anordnung gemäß Figur 1;
- Figur 3 -: eine Detaildarstellung des optischen Systems zur Bilddrehung;
- Figur 4 -: einen Schnitt durch das optische System gemäß Figur 3 entlang der Linie IV-IV und
- Figur 5 -: einen Schnitt durch das optische System zur Bilddrehung gemäß Figur 3 entlang der Linie V-V.

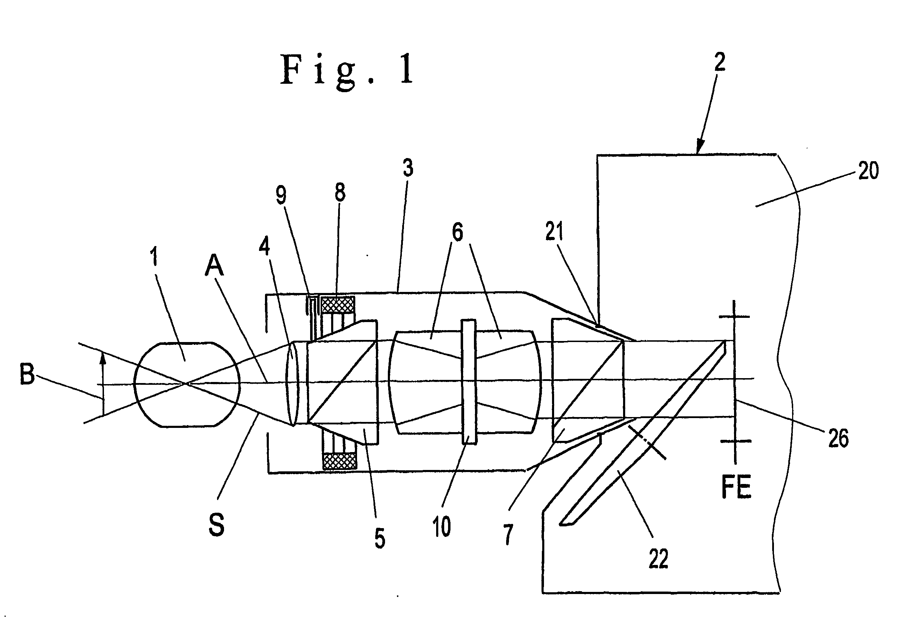

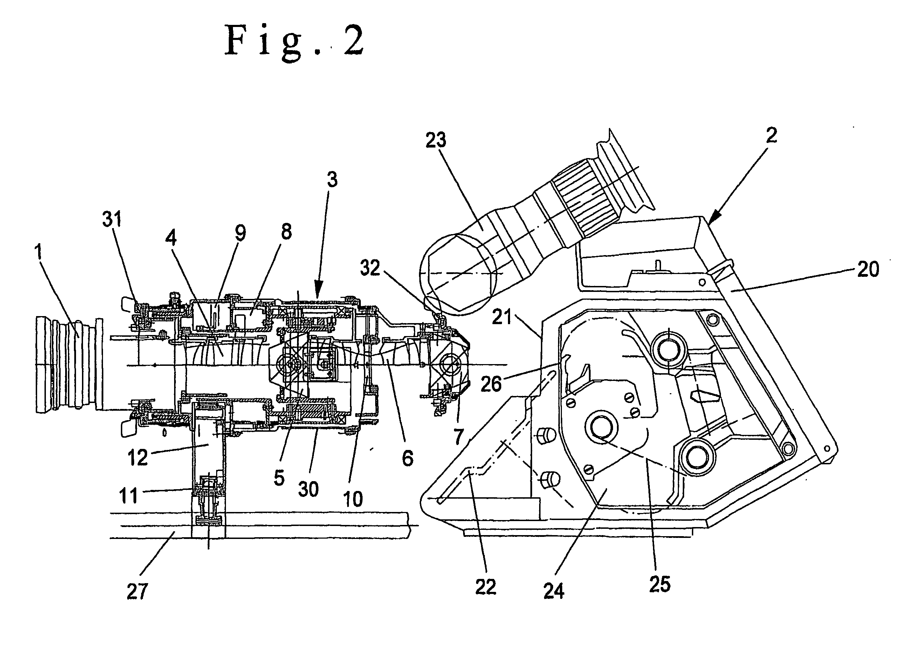

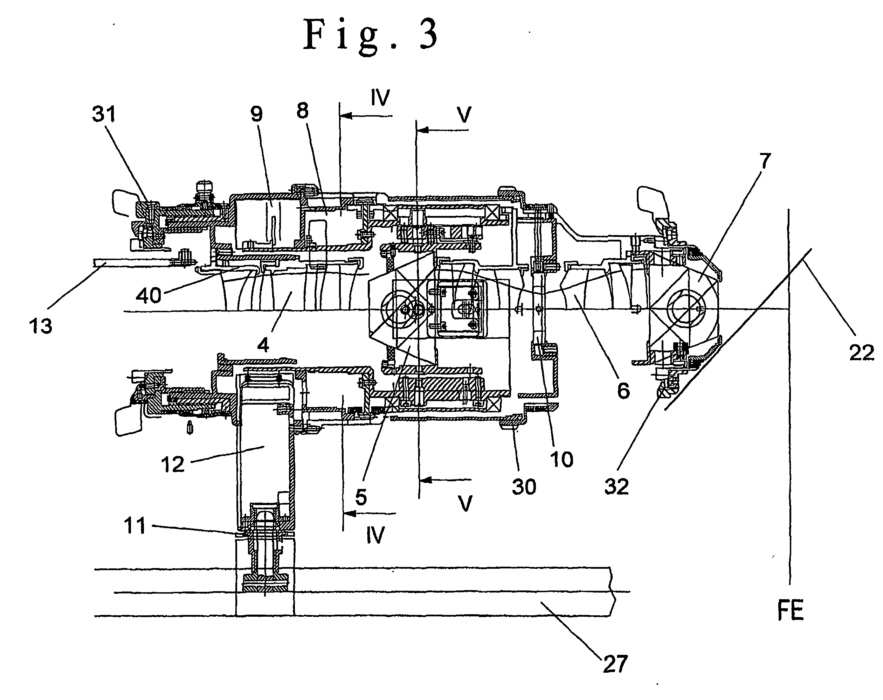

Der in Figur 1 dargestellte schematische Grundaufbau eines zwischen einem Aufnahmeobjektiv 1 und einer Laufbildkamera 2 angeordneten optischen Systems zur Bilddrehung 3 zeigt in Richtung des Aufnahmestrahlenganges hinter dem Aufnahmeobjektiv 1 eine Feldlinse 4, die in einem bevorzugten Ausführungsbeispiel gemäß den Figuren 2 und 3 als Feldlinsenpaket ausgebildet ist.

In Aufnahmestrahlenrichtung hinter der Feldlinse 4 ist ein drehbares Prisma 5 angeordnet, das beispielsweise aus einem Schmidt-Pechan-Prisma bestehen kann. Das drehbare Prisma 5 ist mit einem Verstellmotor 8 verbunden, der aus einem ringförmigen Antriebsmotor zur Drehung des drehbaren Prismas 5 um die optische Achse A besteht. Zur Erfassung des jeweiligen Drehwinkels des drehbaren Prismas 5 gegenüber einer Bezugslage ist ein Positionsgeber 9 vorgesehen, der beispielsweise aus einem optoelektronischen Positionsgeber mit einer hohen Auflösung der zu erfassenden Winkelgrade gebildet wird.

Alternativ zu einem drehbaren Prisma oder in Kombination mit einem drehbaren Prisma kann eine Spiegelanorndung mit mehreren zueinander ausgerichteten Spiegeln vorgesehen werden, die in einer entsprechenden Drehvorrichtung angeordnet sind.

Zusätzlich zur Drehung bzw. Verkippung des drehbaren Prismas oder der drehbaren Spiegelanordnung ist eine Verschiebemöglichkeit des drehbaren optischen Systems in wenigstens einer Achsrichtung, d.h. senkrecht zur optischen Achse oder in Richtung der optischen Achse vorgesehen.

In Aufnahmestrahlenrichtung hinter dem drehbaren Prisma 5 oder der drehbaren Spiegelanordnungist eine Relaisoptik 6 angeordnet, die beispielsweise aus einem Doppel-Gauss-Objektiv bestehen kann. Den Abschluss des optischen Systems zur Bilddrehung 3 bildet ein feststehendes Prisma 7, beispielsweise ebenfalls ein Schmidt-Pechan-Prisma. Innerhalb des Kameragehäuses 20 befindet sich eine rotierende Spiegelblende 22, die den Aufnahmestrahlengang während des Filmtransports unterbricht, so daß die einzelnen Filmbilder des Laufbildfilmes intermittierend zu einem in der Filmebene FE befindlichen Bildfenster 26 bewegt und nach der Freigabe des Aufnahmestrahlenganges durch einen Ausschnitt der Spiegelblende 22 zur Belichtung freigegeben werden.

Wie der schematischen Darstellung gemäß Figur 1 zu entnehmen ist, wird das optische System zur Bilddrehung 3 so mit einem Objektivträger 21 des Kameragehäuses 20 einer Laufbildkamera 2 verbunden, daß das feststehende Prisma 7 in das Kameragehäuse 20 der Laufbildkamera 2 hineinragt, wo es bezüglich seiner Anordnung durch die rotierende Spiegelblende 22 der Laufbildkamera 2 begrenzt wird.

Wie der detaillierten Darstellung gemäß Figur 2 zu entnehmen ist, enthält das Kameragehäuse 20 der Laufbildkamera 2 einen Objektivträger 21 zur Festlegung von Wechselobjektiven bzw. des optischen Systems zur Bilddrehung 3 und in der optischen Achse des Aufnahmeobjektivs 1 ist ein Bildfenster 26 im Kameragehäuse 20 angeordnet, an dem ein Laufbildfilm 25 intermittierend vorbeibewegt wird. Zu diesem Zweck enthält die Laufbildkamera 2 eine Filmtransporteinrichtung 24 für ein Greiferschaltwerk sowie für Zahnrollen zum Abzug und Rücktransport des Laufbildfilmes 25 aus einer bzw. in eine an das Kameragehäuse 20 anzulenkende Kamerakassette.

Eine von einem Blendenmotor oder über ein Getriebe mit der Filmtransporteinrichtung verbundene und von dieser angetriebene rotierende Spiegelblende 22 gibt den durch das Aufanhmeobjektiv 1 und das optische System zur Bilddrehung 3 einfallenden Filmaufnahme-Strahlengang periodisch als Filmbelichtungs-Strahlengang zur Belichtung eines im Bildfenster 26 stehenden Filmbildes des Laufbildfilmes 25 frei bzw. reflektiert den Filmaufnahme-Strahlengang während des Filmtransports als Ausspiegelungs-Strahlengang zu einem Strahlenteiler, von dem ein Sucherstrahlengang zu einem Sucherokular 23 und gegebenenfalls ein Videostrahlengang zu einem Videoaufnahmegerät oder CCD-Videochip oder zu anderen an die Laufbbildkamera angeschlossenen Bildbetrachtungs- oder -verarbeitungseinrichtungen abzweigt.

Der in den Grundaufbau des optischen Systems 1, 3 gemäß Figur 1 eingetragene Strahlengang S zeigt, daß das Aufnahmeobjektiv 1 ein aufzunehmendes Bild B in einer ersten Ebene fokussiert, auf der die Feldlinse 4 bzw. die Fokussierungsebene eines Feldlinsenpakets angeordnet ist, um die vom Aufnahmeobjektiv 1 ausgehenden Strahlen zu konvergieren. Mit Hilfe des hinter der Feldlinse 4 angeordneten drehbaren Prismas 5 werden die Strahlen in die jeweils gewünschte Bildlage gebracht und im Doppel-Gauss-Objektiv 6 zur Irisblende 10 hin konvergiert und anschließend divergiert an das feststehende Prisma 7 weitergeleitet, von dem aus ein Bild in der Ebene des Bildfensters 26 entworfen wird, wenn der Ausschnitt der rotierenden Spiegelblende 22 den Aufnahmestrahlengang zur Aufnahme eines Bildes auf dem Laufbildfilm 25 freigibt.

In der detaillierten Darstellung gemäß Figur 2 sowie in der vergrößerten Darstellung des optischen Systems zur Bilddrehung 3 gemäß Figur 3 ist zu erkennen, daß das Aufnahmeobjektiv 1 über einen vorderen Befestigungsflansch 31 mit dem optischen System zur Bilddrehung 3 verbunden ist, das über einen hinteren Befestigungsflansch 32 mit dem Objektivträger 21 der Laufbildkamera 2 verbunden ist.

Von dem Feldlinsenpaket 4 sind die in der Halterung 40 zusammengefassten vorderen Linsen für verschiedene Gruppen von Aufnahmeobjektiven austauschbar und an unterschiedliche Strahlengänge anpassbar. Weiterhin bewirken die austauschbaren Feldlinsen eine Anpassung an die Austrittspupillenlagen der verschiedenen Aufnahmeobjektive und gewährleisten eine optimale Lichtverteilung, da verschiedene Aufnahmeobjektive zu erheblichen Helligkeitsunterschieden über der Bildfläche und damit zu einem erheblichen Qualitätsverlust führen können.

Die in der Halterung 40 zusammengefassten vorderen Linsen des Feldlinsenpakets 4 können mit Hilfe eines Werkzeugs 13 zur Frontseite des optischen Systems zur Bilddrehung 3 hin herausgenommen und gegen ein Linsensystem anderer Brechkraft ausgewechselt werden. Durch die leichte Austauschbarkeit der Frontlinsen des Feldlinsenpakets 4 ist eine Anpassung an die Austrittspupillenlagen verschiedener Aufnahmeobjektive bei optimaler Lichtverteilung insbesondere wegen der problemlosen Zugänglichkeit der Frontlinsen von der Vorderseite des optischen Systems zur Bilddrehung 3 möglich.

Innerhalb des Tubus 30 des optischen Systems zur Bilddrehung 3 ist ein ringförmiger Antriebsmotor 8 vorgesehen und unmittelbar mit der Aufhängung des drehbaren Prismas 5 verbunden. Ein Positionsgeber 9 erfasst die jeweilige Stellung des drehbaren Prismas 5 in Bezug auf eine Bezugs-Winkellage und gibt die jeweilige Position an eine Elektronik 12 ab, die in einem Verbindungselement 11 angeordnet ist, das mit Stützstangen oder -rohren 26 verbindbar ist, die am Kameragehäuse 20 befestigt sind. Das Verbindungselement 11 übt dabei gleichzeitig eine Trage- und Befestigungsfunktion für das optische System 1, 3 aus. Von der Steuerelektronik 12 werden Steuersignale an den ringförmigen Antriebsmotor 8 zur Drehung des drehbaren Prismas 5 abgegeben.

Durch eine Verbindung der Steuerelektronik 12 mit der Kameraelektronik werden die Verstellbewegungen des drehbaren Prismas 5 mit dem Transport des Laufbildfilmes 25 synchronisiert. Diese Synchronisation erfolgt in der Weise, daß während des Filmtransports, das heißt in der Phase, in der die umlaufende Spiegelblende 22 den Aufnahmestrahlengang zum Bildfenster 26 abdeckt und der Laufbildfilm 25 mittels des Filmtransportmechanismus 24 intermittierend um ein Bild weitertransportiert wird, eine Verstellbewegung des drehbaren Prismas 5 und damit eine Veränderung der Horizontlinie der Aufnahmebilder vorgenommen wird.

Vor Beendigung des Filmtransports und Freigabe des zu belichtenden Filmbildes durch die rotierende Spiegelblende 22 ist auch die Verstellbewegung des drehbaren Prismas 5 beendet, so daß bei aufeinanderfolgenden Einzelbildern eine entsprechende Veränderung der Horizontlinie vorgenommen werden kann. Aufgrund der motorischen Verstellung des drehbaren Prismas 5 können sehr hohe Verstellgeschwindigkeiten erreicht werden, so daß in vielen Anwendungsfällen eine Verstellung der Horizontlinie des drehbaren Prismas 5 innerhalb eines einzelnen Transportschrittes des Laufbildfilmes 25 erfolgen kann.

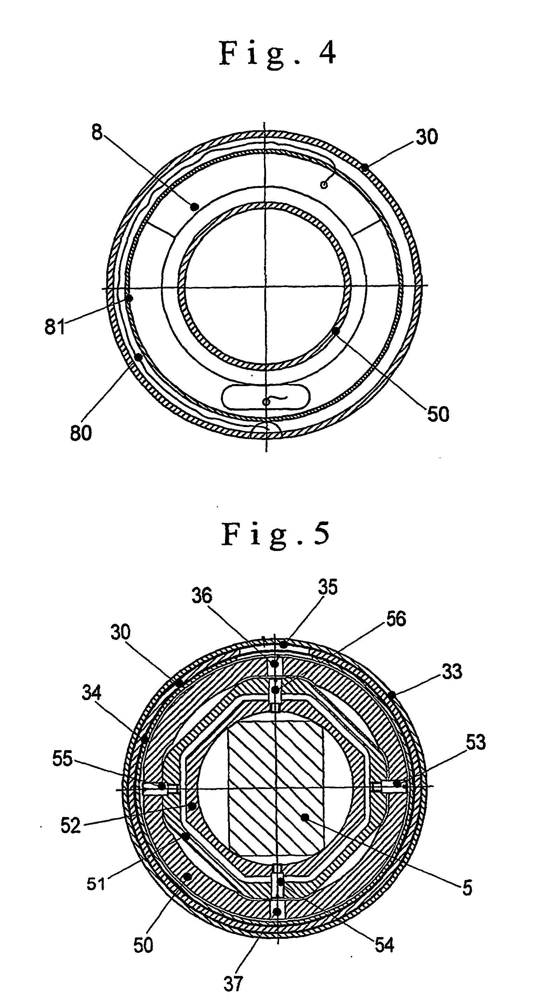

Figur 4 zeigt in einem Schnitt entlang der Linie IV-IV gemäß Figur 3 die Anordnung des ringförmigen Antriebsmotors 8 innerhalb des Tubus 30 des optischen Systems zur Bilddrehung 3 sowie einen Motoranschluss 80 des ringförmigen Antriebsmotors 8, der über eine Prismawelle 50 mit dem drehbaren Prisma 5 (Figur 5) verbunden ist und über einen Motorhalter 81 gegenüber dem Tubus 30 abgestützt ist.

Durch die Verwendung eines ringförmigen Antriebsmotors 8 wird dabei gewährleistet, daß keine externen und exzentrischen Kräfte in das optische System zur Bilddrehung 3 eingeleitet werden, die zu einer Reduktion der optischen Leistungen des optischen Systems zur Bilddrehung 3 führen könnten. Durch die starre Verbindung zwischen dem ringförmigen Antriebsmotor 8 und dem drehbaren Prisma 5 sowie durch die fixierte Anordnung des Positionsgebers 9 im Tubus des optischen Systems zur Bilddrehung 3 tritt keinerlei mechanisches Spiel im Antrieb auf, so daß eine hochgenaue Einstellung der Horizontlinie mittels des optischen Systems zur Bilddrehung 3 erfolgen kann.

Da weiterhin kein mechanisches Getriebe zur Übertragung der Drehbewegung von einem Verstellmotor zum drehbaren Prisma 5 erforderlich ist, kann ein minimaler Geräuschpegel erreicht werden. Da der ringförmige Antriebsmotor problemlos innerhalb des Tubus 30 des optischen Systems zur Bilddrehung 3 angeordnet werden kann, ist der für die Drehung des drehbaren Prismas 5 benötigte Bauraum minimal und deutlich geringer als bei einem externen Antrieb.

Um das drehbare Prisma 5 optimal zentrieren zu können, ist es in drei Achsen zur Bildung einer kardanischen Lagerung aufgehängt. Diese kardanische Aufhängung ermöglicht es, das drehbare Prisma 5 vertikal und horizontal zu kippen sowie eine Höheneinstellung des drehbaren Prismas 5 in Bezug auf den Aufnahmestrahlengang zu ermöglichen, d.h. neben einer Verkippung auch eine Verschiebung in wenigstens einer Achsrichtung - gemäß Figur 1 in Richtung der Y-Achse - vornehmen zu können. Diese kardanische Aufhängung des drehbaren Prismas 5 ist der Schnittdarstellung gemäß Figur 5 zu entnehmen, die einen Schnitt durch das optische System zur Bilddrehung 3 entlang der Linie V-V gemäß Figur 3 zeigt.

Das drehbare Prisma 5 ist in einem Prismastuhl 52 fixiert, dessen Lage mittels zweier Verstellbolzen 54, 56 gegenüber einem Prismahalter 51 verändert werden kann. Die Lage des Prismahalters 51 ist wiederum gegenüber einer Prismawelle 50 veränderbar, die gegenüber dem Tubus 30 des optischen Systems zur Bilddrehung über eine Distanzhülse 34 abgestützt ist.

Zum Kippen und Verschieben des drehbaren Prismas 5 weist der Tubus 30 eine Einstellöffnung 35 auf, und in der Prismawelle 50 sind diametral gegenüberliegend Öffnungen 36, 37 angeordnet, die mit den Einstellschlitzen von Verstellbolzen 53, 54, 55, 56 fluchten. Die zwischen dem Prismahalter 51 und dem Prismastuhl 52 diametral zueinander angeordneten Verstellbolzen 54, 56 bewirken ein horizontales Kippen des Prismastuhls 52 und damit des drehbaren Prismas 5 sowie eine Höheneinstellung des drehbaren Prismas 5. Die senkrecht hierzu und ebenfalls diametral zueinander angeordneten Verstellbolzen 53, 55 sind zwischen der Prismawelle 50 und dem Prismahalter angeordnet und bewirken ein vertikales Kippen des drehbaren Prismas 5. Den äußeren Abschluss des optischen Systems zur Bilddrehung bildet eine Abdeckung 38.

Die Erfindung beschränkt sich in ihrer Ausführung nicht auf die vorstehend angegebenen bevorzugten Ausführungsbeispiele, sondern es ist eine Anzahl von Varianten denkbar, welche von der in der Zeichnung und Beschreibung dargestellten Lösung auch bei grundsätzlich andersgearteten Ausführungen Gebrauch macht. So ist das im vorstehend beschriebenen Ausführungsbeispiel dargestellte Antriebssystem für das optische System zur Bilddrehung auch für die Realisierung anderer Funktionen in optischen Systemen der professionellen Kameratechnik geeignet, beispielsweise für Schwenk- und Neigebewegungen in Schnorchelsystemen.

## Patentansprüche

1. Optisches System (3) zur Drehung von Aufnahmebildern einer Laufbildkamera (2) um die optische Achse mit einer die Drehung der Aufnahmebilder steuernden Einrichtung mit einem Verstellmotor (8) und einem den Drehwinkel des optischen Systems (3) zur Drehung von Aufnahmebildern erfassenden Positionsgeber (9) und mit einem die optischen Elemente (4 - 7) zur Drehung der Aufnahmebilder enthaltenden Tubus (30),
**dadurch gekennzeichnet,**
**dass** der Verstellmotor im Tubus (30) angeordnet ist und aus einem um ein drehbar gelagertes optisches Element (5) des optischen Systems (3) zur Drehung von Aufnahmebildern angeordneten und mit diesem verbundenen ringförmigen Antriebsmotor (8) besteht und dass der Positionsgeber (9) den Drehwinkel des drehbar gelagerten optischen Elements (5) erfasst und im Tubus (30) befestigt ist.

2. Optisches System nach Anspruch 1, **gekennzeichnet durch** eine endlose Drehung von Aufnahmebildern um die optische Achse.

3. Optisches System nach Anspruch 1 oder 2, **dadurch gekennzeichnet, dass** das drehbar gelagerte optische Element (5) in Richtung der optischen Achse und/oder senkrecht dazu verschiebbar ist.

4. Optisches System nach mindestens einem der voranstehenden Ansprüche, **dadurch gekennzeichnet, dass** das drehbar gelagerte optische Element (5) aus einem drehbaren Prisma, vorzugsweise einem Schmidt-Pechan-Prisma, und/oder einer drehbaren Spiegelanordnung besteht.

5. Optisches System nach mindestens einem der voranstehenden Ansprüche, **dadurch gekennzeichnet, dass** in Richtung des Aufnahmestrahlenganges (A) eine Feldlinse (4) oder ein Feldlinsensystem, das drehbar gelagerte optische Element (5), ein Übertragungsobjektiv (6) und ein feststehendes Prisma (7) oder eine Spiegelanordnung angeordnet sind.

6. Optisches System nach Anspruch 5, **dadurch gekennzeichnet, dass** das Übertragungsobjektiv (6) aus einer Relaisoptik oder einem Doppel-Gauss-Objektiv besteht.

7. Optisches System nach mindestens einem der voranstehenden Ansprüche, **dadurch gekennzeichnet, dass** das optische System (3) zur Drehung von Aufnahmebildern zwischen einem Objektivträger (21) des Kameragehäuses (20) und einem Aufnahmeobjektiv (1) der Laufbildkamera (2) angeordnet ist.

8. Optisches System nach mindestens einem der voranstehenden Ansprüche, **gekennzeichnet durch** einen vorderen und hinteren Befestigungsflansch (31, 32) zur Verbindung des optischen Systems (3) zur Drehung von Aufnahmebildern mit dem Aufnahmeobjektiv (1) und dem Objektivträger (21) des Kameragehäuses (20).

9. Optisches System nach Anspruch 8, **dadurch gekennzeichnet, dass** der hintere Befestigungsflansch (32) des optischen Systems (3) zur Drehung von Aufnahmebildern so angeordnet ist, daß bei mit dem Objektivträger (21) verbundenem optischen System (3) zur Drehung von Aufnahmebildern das feststehende Prisma (7) zumindest teilweise innerhalb des Kameragehäuses (20) angeordnet ist.

10. Optisches System nach mindestens einem der voranstehenden Ansprüche, **dadurch gekennzeichnet, dass** zwischen dem Übertragungsobjektiv (6) und dem feststehenden Prisma (7) eine Irisblende (10) in dem optischen System (3) zur Drehung von Aufnahmebildern angeordnet und von der Gehäuseseite des optischen Systems (3) zur Drehung von Aufnahmebildern bedienbar ist.

11. Optisches System nach mindestens einem der voranstehenden Ansprüche, **gekennzeichnet durch** eine zumindest einen Teil der optischen Elemente (4 - 7) des optischen Systems (3) zur Drehung von Aufnahmebildern justierende Einrichtung.

12. Optisches System nach Anspruch 11, **dadurch gekennzeichnet, dass** die die optischen Elemente (4 - 7) des optischen Systems (3) zur Drehung von Aufnahmebildern justierende Einrichtung Mittel zur Korrektur von Abbildungsfehlern aufweist.

13. Optisches System nach mindestens einem der Ansprüche 5 oder 8, **dadurch gekennzeichnet, dass** die Feldlinse (4) oder das Feldlinsensystem so angeordnet und befestigt ist, daß die Feldlinse (4) oder zumindest ein Teil des Feldlinsensystems vorzugsweise von der Seite des vorderen Befestigungsflansches (31) austauschbar ist.

14. Optisches System nach mindestens einem der voranstehenden Ansprüche, **dadurch gekennzeichnet, dass** das drehbare Prisma (5) im Gehäuse des optischen Systems (3) zur Drehung von Aufnahmebildern kardanisch aufgehängt und in mindestens zwei Ebenen verstellbar ist.

15. Optisches System nach Anspruch 14, **dadurch gekennzeichnet, dass** das drehbare Prisma (5) in einem Prismastuhl (52) befestigt ist, der um eine erste Achse schwenkbar in einem Prismahalter (51) gelagert ist, und daß der Prismahalter (51) um eine zweite, vorzugsweise senkrecht zur ersten Achse angeordnete zweite Achse schwenkbar in einer mit dem ringförmigen Antriebsmotor (8) verbundenen Prismawelle (50) angeordnet ist.

16. Optisches System nach Anspruch 15, **dadurch gekennzeichnet, dass** die Prismawelle (50) innerhalb einer Distanzhülse (34) für das Lager des drehbaren Prismas (5) angeordnet ist, daß die Distanzhülse (34) innerhalb eines Tubus (30) gelagert und daß der Tubus (30) von einer Abdeckung (33) des Gehäuses des optischen Systems (3) zur Drehung von Aufnahmebildern umgeben ist.

17. Optisches System nach einem der voranstehenden Ansprüche 14 bis 16, **dadurch gekennzeichnet, dass** die erste und zweite Achse aus Bolzen (53 bis 56) bestehen, wobei die die erste Achse bildenden Bolzen (53, 55) diametral zueinander angeordnet, drehbar in der Prismawelle (50) gelagert und mit dem Prismahalter (51) verbunden sind und die zweite Achse durch diametral zueinander und senkrecht zu den Bolzen (53, 55) der ersten Achse angeordnete Bolzen (54, 56) gebildet wird, die im Prismahalter (51) gelagert und mit dem Prismastuhl (52) verbunden sind.

18. Optisches System nach mindestens einem der voranstehenden Ansprüche 14 bis 17, **dadurch gekennzeichnet, dass** im Gehäuse des optischen Systems (3) zur Drehung von Aufnahmebildern bzw. im Tubus (30) und in der Prismawelle (50) eine Öffnung (35, 36, 37) zum Einstellen der Bolzen (53 bis 56) angeordnet ist.

19. Optisches System nach mindestens einem der voranstehenden Ansprüche, **dadurch gekennzeichnet, dass** das Gehäuse des optischen Systems (3) zur Drehung von Aufnahmebildern über ein Verbindungselement (11) mit am Kameragehäuse (20) der Laufbildkamera (2) befestigten Irisstangen (27) verbunden ist.

20. Optisches System nach Anspruch 19, **dadurch gekennzeichnet, dass** das Verbindungselement (11) eine mit dem Positionsgeber (9) und dem ringförmigen Antriebsmotor (8) verbundene Steuerelektronik (12) enthält.

21. Optisches System nach mindestens einem der voranstehenden Ansprüche, **dadurch gekennzeichnet, dass** die Drehung des optischen Systems (3) zur Drehung von Aufnahmebildern mit dem Filmtransport synchronisiert ist.

22. Optisches System nach Anspruch 21, **dadurch gekennzeichnet, dass** die Drehung des optischen Systems (3) zur Drehung von Aufnahmebildern in der Transportphase des Laufbildfilms (25) erfolgt.

23. Optisches System nach Anspruch 21 oder 22, **dadurch gekennzeichnet, dass** während der Transportphase des Laufbildfilms (25) ein Freigabesignal an die Steuerelektronik (12) zur Ansteuerung des Verstellmotors (8) abgegeben wird.

## Claims

1. Optical system (3) for the rotation of images taken by a film camera (2) about the optical axis with a device controlling the rotation of the images taken and having an adjusting motor (8) and a position sensor (9) which detects the rotation angle of the image-rotating optical system (3) and with a tube (30) containing the optical elements (4 - 7) for rotating the images taken,
**characterised in that**
the adjusting motor is mounted in the tube (30) and consists of a ring-shaped drive motor (8) mounted about a rotatably mounted optical element (5) of the optical system (3) for rotating the images taken and connected to same, and that the position sensor (9) detects the rotational angle of the rotatably mounted optical element (5) and is fixed in the tube (30).

2. Optical system according to claim 1, **characterised by** a continuous rotation of recorded images about the optical axis (A).

3. Optical system according to claim 1 or 2, **characterised in that** the rotatably mounted optical element (5) is displaceable in the direction of the optical axis and/or perpendicular thereto.

4. Optical system according to at least one of the preceding claims, **characterised in that** the rotatably mounted optical element (5) consists of a rotatable prism, preferably a Schmidt Pechan prism, and/or a rotatable mirror assembly.

5. Optical system according to at least one of the preceding claims, **characterised in that** a field lens (4) or a field lens system, the rotatable prism (5) and/or the rotatable mirror assembly, a transmission lens (6) and a fixed prism (7) or a mirror assembly are provided in the direction of the recording beam path (A).

6. Optical system according to claim 5, **characterised in that** the transmission lens (6) consists of a relay optic or a double Gauss lens.

7. Optical system according to at least one of the preceding claims, **characterised in that** the image-rotating optical system (3) is mounted between a lens carrier (21) of the camera housing (20) and a recording lens (1) of the film camera (2).

8. Optical system according to at least one of the preceding claims, **characterised by** a front and rear fastening flange (31, 32) for connecting the image-rotating optical system (3) to the recording lens (1) and to the lens carrier (21) of the camera housing (20).

9. Optical system according to claim 8, **characterised in that** the rear fastening flange (32) of the image-rotating optical system (3) is arranged so that in the image-rotating optical system (3) connected to the lens carrier (21) the fixed prism (7) is mounted at least in part inside the camera housing (20).

10. Optical system according to at least one of the preceding claims, **characterised in that** an iris aperture (10) is mounted in the image-rotating optical system (3) between the transmission lens (6) and the fixed prism (7) and can be operated from the housing side of the image-rotating optical system (3).

11. Optical system according to at least one of the preceding claims, **characterised by** an adjusting device which adjusts at least a part of the optical elements (4-7) of the image-rotating optical system (3).

12. Optical system according to claim 11, **characterised in that** the device adjusting the optical elements (4-7) of the image-rotating optical system (3) has means for correcting picture errors.

13. Optical system according to at least one of the claims 5 or 8, **characterised in that** the field lens (4) or the field lens system is arranged and fixed so that the field lens (4) or at least a part of the field lens system can be exchanged preferably from the side of the front fastening flange (31).

14. Optical system according to at least one of the preceding claims, **characterised in that** the rotatable prism (5) is suspended through Cardan fixing in the housing of the image-rotating optical system (3) and is adjustable in at least two planes.

15. Optical system according to claim 14, **characterised in that** the rotatable prism (5) is fixed in a prism chair (52) which is mounted in a prism holder (51) to swivel about a first axis, and that the prism holder (51) is mounted in a prism shaft (50) connected to the ring-shaped drive motor (8) to swivel about a second axis which is preferably perpendicular to the first axis.

16. Optical system according to claim 15, **characterised in that** the prism shaft (50) is mounted inside a distance sleeve (34) for the bearing of the rotatable prism (5), that the distance sleeve (34) is mounted inside a tube (30) and that the tube (30) is enclosed by a cover (33) of the housing of the image-rotating optical system (3).

17. Optical system according to at least one of the preceding claims 14 to 16, **characterised in that** the first and second axis consist of bolts (53 to 56) wherein the bolts (53, 55) forming the first axis are arranged diametrically opposite one another, are mounted rotatable in the prism shaft (50) and are connected to the prism holder (51) whilst the second axis is formed by bolts (54, 56) which are arranged diametrically relative to each other and perpendicular to the bolts (53, 55) of the first axis and which are mounted in the prism holder (51) and are connected to the prism chair (52).

18. Optical system according to at least one of the preceding claims 14 to 17, **characterised in that** an opening (35, 36, 37) for adjusting the bolts (53 to 56) is provided in the housing of the image-rotating optical system (3) or in the tube (30) and in the prism shaft (50).

19. Optical system according to at least one of the preceding claims, **characterised in that** the housing of the image-rotating optical system (3) is connected through a connecting element (11) to iris rods (27) fixed on the camera housing (20) of the film camera (2).

20. Optical system according to claim 19, **characterised in that** the connecting element (11) contains a control electronics unit (12) connected to the position sensor (9) and the ring-shaped drive motor (8).

21. Optical system according to at least one of the preceding claims, **characterised in that** the rotation of the image-rotating optical system (3) is synchronised with the film transport.

22. Optical system according to claim 21, **characterised in that** the rotation of the image-rotating optical system (3) takes place in the transport phase of the moving film (25).

23. Optical system according to claim 21 or 22, **characterised in that** during the transport phase of the moving film (25) a release signal is sent to the control electronics unit (12) to control the adjusting motor (8).

## Revendications

1. Système optique (3) pour la mise en rotation d'images prises par une caméra (2) autour de l'axe optique avec un dispositif commandant la rotation des images comportant un moteur de réglage (8) et un indicateur de position (9) saisissant l'angle de rotation du système optique (3) pour la rotation des images et comportant un tube (30) contenant les éléments optiques (4 - 7) pour la rotation des images,
**caractérisé en ce que**
le moteur de réglage est disposé dans le tube (30) et est composé d'un élément optique (5), logé de façon rotative, du système optique (3) pour la rotation des images et d'un moteur d'entraînement (8) annulaire raccordé à celui-ci, et **en ce que** l'indicateur de position (9) détecte l'angle rotatif de l'élément optique logé de façon rotative (5) et est fixé dans le tube (30).

2. Système optique selon la revendication 1, **caractérisé par** une rotation sans fin des images autour de l'axe optique.

3. Système optique selon la revendication 1 ou 2, **caractérisé en ce que** l'élément optique (5) logé de façon rotative peut être déplacé dans la direction de l'axe optique et/ou perpendiculairement à celui-ci.

4. Système optique selon au moins l'une des revendications précédentes, **caractérisé en ce que** l'élément optique (5) logé de façon rotative est composé d'un prisme rotatif, de préférence un prisme Schmidt-Pechan, et/ou d'un dispositif à miroir rotatif.

5. Système optique selon au moins l'une des revendications précédentes, **caractérisé en ce que**, dans la direction du parcours optique de prise de vues (A), sont disposés une lentille de champ (4) ou un système de lentilles de champ, l'élément optique logé de façon rotative (5), un objectif de transmission (6) et un prisme fixe (7) ou un dispositif à miroir.

6. Système optique selon la revendication 5, **caractérisé en ce que** l'objectif de transmission (6) est composé d'un objectif de Gauss double.

7. Système optique selon au moins l'une des revendications précédentes, **caractérisé en ce que** le système optique (3) pour la rotation des images est disposé entre un porte-objectif (21) du boîtier de caméra (20) et un objectif de prise de vues (1) de la caméra (2).

8. Système optique selon au moins l'une des revendications précédentes, **caractérisé par** une bride de fixation avant et arrière (31, 32) pour le raccordement du système optique (3) pour la rotation des images avec l'objectif de prise de vues (1) et le porte-objectif (21) du boîtier de caméra (20).

9. Système optique selon la revendication 8, **caractérisé en ce que** la bride de fixation arrière (32) du système optique (3) pour la rotation des images est disposée de telle sorte que le prisme fixe (7) est disposé près du système optique (3) pour la rotation des images raccordé avec le support d'objectif (21), au moins partiellement à l'intérieur du boîtier de la caméra (20).

10. Système optique selon au moins l'une des revendications précédentes, **caractérisé en ce qu'**entre l'objectif de transmission (6) et le prisme fixe (7), est disposé un diaphragme à iris (10) dans le système optique (3) pour la rotation des images et peut être commandé depuis le côté du boîtier du système optique (3) pour la rotation des images.

11. Système optique selon au moins l'une des revendications précédentes, **caractérisé par** un dispositif d'ajustement d'au moins une partie des éléments optiques (4 - 7) du système optique (3) pour la rotation des images.

12. Système optique selon la revendication 11, **caractérisé en ce que** le dispositif d'ajustement des éléments optiques (4 - 7) du système optique (3) pour la rotation des images comporte des moyens pour la correction des erreurs de reproduction.

13. Système optique selon au moins l'une des revendications 5 ou 8, **caractérisé en ce que** la lentille de champ (4) ou le système de lentilles de champ sont disposés et fixés de telle sorte que la lentille de champ (4) ou au moins une partie du système de lentilles de champ peuvent être échangés, de préférence, depuis le côté de la bride de fixation avant (31).

14. Système optique selon au moins l'une des revendications précédentes, **caractérisé en ce que** le prisme rotatif (5) est suspendu par cardan dans le boîtier du système optique (3) pour la rotation des images et peut être déplacé dans au moins deux plans.

15. Système optique selon la revendication 14, **caractérisé en ce que** le prisme rotatif (5) est fixé dans un siège de prisme (52) qui est logé de façon pivotante autour d'un premier axe dans un support de prisme (51), et **en ce que** le support de prisme (51) est disposé de façon pivotante autour d'un deuxième axe, de préférence perpendiculaire au premier axe, dans un arbre de prisme (50) raccordé au moteur d'entraînement annulaire (8).

16. Système optique selon la revendication 15, **caractérisé en ce que** l'arbre de prisme (50) est disposé à l'intérieur d'une douille d'entretoisement (34) pour le logement du prisme rotatif (5), **en ce que** la douille d'entretoisement (34) est logée à l'intérieur d'un tube (30), et **en ce que** le tube (30) est entouré d'un revêtement (33) du boîtier du système optique (3) pour la rotation des images.

17. Système optique selon l'une des revendications précédentes 14 à 16, **caractérisé en ce que** le premier et le second axe se composent de boulons (53 à 56), les boulons (53, 55) formant le premier axe étant disposés de façon diamétralement opposée entre eux, étant logés de façon rotative dans l'arbre de prisme (50) et étant raccordés au support de prisme (51), et **en ce que** le second axe est formé par des boulons (54, 56) disposés de façon diamétralement opposée entre eux et perpendiculairement aux boulons (53, 55) du premier axe, et qui sont logés dans le support de prisme (51) et raccordés avec le siège de prisme (52).

18. Système optique selon au moins l'une des revendications précédentes 14 à 17, **caractérisé en ce que**, dans le boîtier du système optique (3) pour la rotation des images, une ouverture (35, 36, 37) pour le réglage des boulons (53 à 56) est disposée, dans le tube (30) et dans l'arbre de prisme (50).

19. Système optique selon au moins l'une des revendications précédentes, **caractérisé en ce que** le boîtier du système optique (3) pour la rotation des images est raccordé par le biais d'un élément de raccordement (11), à une tige à iris (27) fixée sur le boîtier de caméra (20) de la caméra (2).

20. Système optique selon la revendication 19, **caractérisé en ce que** l'élément de raccordement (11) contient une électronique de commande (12) raccordée à l'indicateur de position (9) et au moteur d'entraînement annulaire (8).

21. Système optique selon au moins l'une des revendications précédentes, **caractérisé en ce que** la rotation du système optique (3) pour la rotation des images est synchronisée avec l'acheminement du film.

22. Système optique selon la revendication 21, **caractérisé en ce que** la rotation du système optique (3) pour la rotation des images s'effectue dans la phase d'acheminement du film (25).

23. Système optique selon la revendication 21 ou 22, **caractérisé en ce que**, pendant la phase d'acheminement du film (25), un signal d'autorisation est émis à destination de l'électronique de commande (12) pour le pilotage du moteur d'ajustement (8).
